(19) Europäisches Patentamt
European Patent Office
Office européen des brevets

(11) **EP 4 629 351 A1**

(12) **EUROPEAN PATENT APPLICATION**
published in accordance with Art. 153(4) EPC

(43) Date of publication:
**08.10.2025  Bulletin 2025/41**

(21) Application number: **23898020.5**

(22) Date of filing: **18.09.2023**

(51) International Patent Classification (IPC):
*H01M 4/92* (2006.01)   *H01M 4/88* (2006.01)
*H01M 8/2418* (2016.01)   *H01M 8/10* (2016.01)

(52) Cooperative Patent Classification (CPC):
**H01M 4/88; H01M 4/92; H01M 8/10; H01M 8/2418;**
**Y02E 60/50**

(86) International application number:
**PCT/KR2023/014075**

(87) International publication number:
**WO 2024/117486 (06.06.2024 Gazette 2024/23)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **29.11.2022  KR 20220163031**

(71) Applicant: **Dongjin Semichem Co., Ltd.**
**Incheon 22824 (KR)**

(72) Inventors:
• **KIM, Nam Hoon**
**Incheon 22824 (KR)**
• **KIM, Sang Uk**
**Incheon 22824 (KR)**
• **IM, Jeong Hyuk**
**Incheon 22824 (KR)**
• **KIM, Tae Yoon**
**Incheon 22824 (KR)**
• **CHOI, Dong Woong**
**Incheon 22824 (KR)**

(74) Representative: **Grünecker Patent- und**
**Rechtsanwälte**
**PartG mbB**
**Leopoldstraße 4**
**80802 München (DE)**

(54) **MEMBRANE ELECTRODE ASSEMBLY AND FUEL CELL COMPRISING SAME**

(57)     An embodiment of the present disclosure provides a membrane electrode assembly including a first electrode portion, a second electrode portion, and an electrolyte membrane, wherein each electrode portion includes a catalyst layer and a gas diffusion layer, the catalyst layer includes platinum and a carbon support, and a platinum loading amount of the electrode portions is 1.5 to 5 mg/cm$^2$.

FIG. 2

**EP 4 629 351 A1**

## Description

### Technical Field

The present disclosure relates to a membrane electrode assembly and a fuel cell including the same.

### Background Art

A fuel cell is a device that generates electrical energy by electrochemically reacting fuel and an oxidizer. This chemical reaction occurs in a catalyst layer by a catalyst, and generally, power generation may continue as long as fuel is continuously supplied.

Among fuel cells, a polymer electrolyte membrane fuel cell (PEMFC), which uses, as an electrolyte, a polymer membrane that may allow hydrogen ions to permeate therethrough, is a high-power fuel cell with a high current density compared to other types of fuel cells, operates at a relatively low temperature of less than 100°C, and has a simple structure (Non-patent literature, Zhiwei Yang; et al. (2004). Prep. Pap.-Am. Chem. Soc., Div. Fuel Chem. 49 (2): 599.). Such PEMFCs have a very wide range of applications, including as a power source for zero-emission vehicles, military power sources, and power sources for spacecraft.

Meanwhile, there are limitations in securing the durability of electrodes, electrolytes, and other components to fit these PEMFCs to various applications and design levels, and in implementing PEMFCs through these.

### Disclosure of Invention

### Technical Problem

Embodiments of the present disclosure provide: a membrane electrode assembly with improved durability and output performance; and a fuel cell including the same.

### Solution to Problem

An embodiment of the present disclosure provides a membrane electrode assembly including a first electrode portion, a second electrode portion, and an electrolyte membrane, wherein each electrode portion includes a catalyst layer and a gas diffusion layer, the catalyst layer includes platinum and a carbon support, and a platinum loading amount of the first electrode portion or the second electrode portion is 1.5 to 5 mg/cm$^2$.

In some embodiments, the platinum amount of the first electrode portion or the second electrode portion may be 80 to 85 wt%.

In some embodiments, the platinum may include platinum nanoparticles having a diameter of 2 to 10 nm.

In some embodiments, a thickness of the electrolyte membrane may be 50 to 80 $\mu$m.

In some embodiments, the electrolyte membrane may include a reinforcing layer, and the proportion of the reinforcing layer in the electrolyte membrane may be 20 to 30%.

In some embodiments, the electrolyte membrane may include a plurality of reinforcing layers spaced apart from each other.

In some embodiments, the gas diffusion layer may include carbon paper and a micro-porous layer.

In some embodiments, the gas diffusion layer may include polytetrafluoroethylene (PTFE).

In some embodiments, carbon paper of the gas diffusion layer may include 15 to 25 wt% of PTFE.

In some embodiments, the ratio of the thickness of the micro-porous layer to the total thickness of the gas diffusion layer may be 3 to 5%.

In some embodiments, the micro-porous layer in the gas diffusion layer may include 25 to 35 wt% of PTFE.

In some embodiments, an impregnation degree of the micro-porous layer in the gas diffusion layer may be 0.01 to 0.1.

In some embodiments, carbon paper and the micro-porous layer of the gas diffusion layer may each include PTFE, and the amount ratio of the PTFE in carbon paper to PTFE in the micro-porous layer may be 1:1 to 1:2.5.

Another embodiment of the present disclosure provides a fuel cell including a plurality of unit cells spaced apart from each other, each of the plurality of unit cells including the membrane electrode assembly.

Other aspects, features and advantages other than those described above will become apparent from the following drawings, claims and detailed description of the invention.

**Advantageous Effects of Invention**

A membrane electrode assembly according to the present disclosure and a fuel cell including the same may have improved durability, and output performance of the fuel cell can be enhanced.

**Brief Description of Drawings**

FIG. 1 is a cross-sectional view schematically showing a membrane electrode assembly according to an embodiment of the present disclosure.

FIG. 2 is a cross-sectional diagram schematically illustrating an optional embodiment of the membrane electrode assembly of FIG. 1.

FIG. 3 is a cross-sectional view schematically showing a fuel cell according to an embodiment of the present disclosure.

FIG. 4 is a diagram showing the results of measuring the amount of platinum in a catalyst of a catalyst layer according to an embodiment of the present disclosure.

FIG. 5 is a diagram showing the results of measuring the amount of platinum in an anode according to an embodiment of the present disclosure.

FIG. 6 is a diagram showing the results of measuring the amount of platinum in a cathode according to an embodiment of the present disclosure.

FIG. 7 is a diagram showing the results of observing platinum nanoparticles in a catalyst layer according to an embodiment of the present disclosure.

FIG. 8 is a diagram showing the results of measuring the size of platinum nanoparticles in a catalyst layer according to an embodiment of the present disclosure.

FIG. 9 is a diagram showing the results of evaluating the long-term durability of a membrane electrode assembly according to platinum loading in a catalyst layer according to the present disclosure.

FIG. 10 is a diagram showing the results of evaluating the initial performance of a membrane electrode assembly according to the platinum amount of an electrode portion for a fuel cell according to the present disclosure.

FIG. 11 is a diagram showing the results of evaluating the performance of a membrane electrode assembly according to a PTFE ratio in carbon paper according to the present disclosure.

FIG. 12 is a diagram showing the results of evaluating the performance of a membrane electrode assembly according to a PTFE ratio in a micro-porous layer according to the present disclosure.

FIG. 13 is a diagram showing the results of evaluating the performance of a membrane electrode assembly according to the thickness of a micro-porous layer according to the present disclosure.

FIG. 14 is a schematic diagram of a typical micro-porous layer.

FIG. 15 is a diagram showing the results of evaluating the performance of a membrane electrode assembly according to the degree of impregnation of a micro-porous layer according to the present disclosure.

FIG. 16 is a diagram showing the results of evaluating the performance reduction rate of a membrane electrode assembly according to the thickness of the electrolyte membrane according to the present disclosure.

FIG. 17 is a diagram showing the results of evaluating the performance of a membrane electrode assembly according to the ratio of the reinforcing layer of an electrolyte membrane having one reinforcing layer according to the present disclosure.

FIG. 18 is a diagram showing the results of evaluating the performance of a membrane electrode assembly according to the ratio of reinforcing layers of an electrolyte membrane having two reinforcing layers according to the present disclosure.

FIG. 19 is a diagram showing the results of evaluating the performance of a membrane electrode assembly according to the ratio of reinforcing layers of an electrolyte membrane having three reinforcing layers according to the present disclosure.

**List of Reference Numerals for Major Elements**

10, 10': Membrane electrode assembly
10A: First membrane electrode assembly
10B: Second membrane electrode assembly
20: Fuel Cell

100: Electrolyte membrane
110A: First electrode portion
110B: Second electrode portion
120A: First porous support
120B: Second porous support
130: Reinforcing layer
140A: First unit cell
140B: Second unit cell

**Best Mode for the Invention**

An embodiment of the present disclosure is illustrated in the accompanying drawings. However, this creative idea can be embodied in many different forms and should not be construed as limited to the embodiments described herein. Rather, these embodiments are provided so that this disclosure will be thorough and complete, and will fully convey the scope of the present inventive idea to those skilled in the art. Identical drawing symbols indicate identical components.

The terminology used herein is for the purpose of describing particular embodiments only and is not intended to limit the invention. As used herein, the singular form is intended to include the plural form including "at least one," unless the context clearly dictates otherwise. "At least one" should not be construed as limiting to the singular. As used herein, the term "and/or" includes any and all combinations of one or more of the listed items. The terms "includes/comprises" and/or "including/comprising" as used in the detailed description specify the presence of stated features, regions, integers, steps, operations, components and/or ingredients, but do not preclude the presence or addition of one or more other features, regions, integers, steps, operations, components, ingredients and/or groups thereof.

Unless otherwise defined, all terms (including technical and scientific terms) used herein have the same meaning as commonly understood by one of ordinary skill in the art to which this disclosure belongs. It will also be understood that terms defined in commonly used dictionaries should be interpreted to have a meaning consistent with their meaning within the context of the relevant art and the present disclosure, and not in an idealized or overly formal sense.

Although specific embodiments have been described, presently unanticipated or unforeseen alternatives, modifications, variations, improvements, and substantial equivalents may occur to applicants or those skilled in the art. Accordingly, the appended claims, as filed and as amended, are intended to encompass all such alternatives, modifications, variations, improvements and substantial equivalents.

In embodiments below, the terms first, second, etc. are not used in a limiting sense but are used for the purpose of distinguishing one component from another.

In embodiments below, singular expressions include plural expressions unless the context clearly indicates otherwise.

In the drawings, the sizes of components may be exaggerated or reduced for convenience of explanation. For example, the size and thickness of each component shown in drawings are arbitrarily shown for convenience of explanation, and thus the present disclosure is not necessarily limited to what is shown.

In embodiments below, the x-axis, y-axis, and z-axis are not limited to three axes on an orthogonal coordinate system, and may be interpreted in a broad sense that includes them. For example, the x-axis, y-axis, and z-axis may be orthogonal to each other, but they may also refer to different directions that are not orthogonal to each other.

In cases where an embodiment can be implemented differently, the specific process steps may be performed in an order different from the order described. For example, two processes described sequentially may be performed substantially simultaneously, or may proceed in the reverse order from that described.

A membrane electrode assembly according to an embodiment of the present disclosure includes a first electrode portion, a second electrode portion, and an electrolyte membrane.

For example, the membrane electrode assembly may be included in a unit cell for a fuel cell according to an embodiment. In addition, the membrane electrode assembly may be used for, but is not limited to, ships, automobiles, buildings, drones, heavy equipment, portable devices, or aviation.

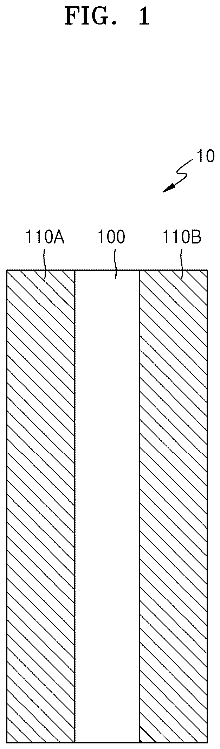

FIG. 1 is a cross-sectional view schematically showing a membrane electrode assembly according to an embodiment of the present disclosure.

According to FIG. 1, a membrane electrode assembly 10 includes a first electrode portion 110A, a second electrode portion 110B, and an electrolyte membrane 100.

In an embodiment, the first electrode portion 110A and the second electrode portion 110B may be an anode or a cathode.

For convenience of explanation, embodiments in which the first electrode portion 110A is an anode and the second electrode portion 110B is a cathode, will now be described in detail. In some embodiments, the first electrode portion 110A may be a cathode and the second electrode portion 110B may be an anode, but embodiments are not limited thereto.

The first electrode portion 110A and the second electrode portion 110B may each include a catalyst layer and a gas diffusion layer.

The catalyst layer may include a conductive material. In an embodiment, the catalyst layer may include an anode material or a cathode material.

For example, the anode material may include at least one metal of platinum, silver, gold, rhodium, palladium, ruthenium, nickel, iron, cobalt, titanium, or copper. In an embodiment, the anode material may include the at least one of the metals and an ion-conducting ceramic material.

The cathode material may be any one of a metal or oxide of platinum, silver, gold, rhodium, palladium, ruthenium, lanthanum-strontium-manganese silicide (LSM) or lanthanum-strontium-cobalt-iron oxide manganese-strontium.

The conductive material may be used by itself, or may be used by being supported on a suitable carrier.

The catalyst layer may further include an ionomer.

The ionomer may include a polymer including at least one sulfonated aromatic compound selected from the group consisting of perfluorosulfonic acid (PFSA), phenol sulfonic acid, polystyrene sulfonic acid, fluorinated styrene sulfonic acid, and a combination thereof.

According to an embodiment of the present disclosure, the catalyst layer may include platinum and a carbon support.

In this regard, the loading amount of platinum in the catalyst layer may be 1.5 to 5 $mg/cm^2$, 2 to 5 $mg/cm^2$, 3 to 5 $mg/cm^2$, 1.5 to 3.5 $mg/cm^2$, 1.5 to 2.5 $mg/cm^2$, or 3.5 to 5 $mg/cm^2$, and is not particularly limited thereto, and may be appropriately selected depending on whether an electrode portion for a fuel cell including the catalyst layer is a cathode or an anode.

When the loading amount of platinum is less than 1.5 $mg/cm^2$, the durability of the membrane electrode assembly may deteriorate. Accordingly, the loading amount may be adjusted to be 1.5 $mg/cm^2$ or more. When the loading amount of platinum exceeds 5 $mg/cm^2$, the manufacturing defect rate of the membrane electrode assembly increases. Accordingly, the loading amount of platinum may be adjusted to be 5 $mg/cm^2$ or less.

The loading amount of platinum may be measured by X-ray fluorescence (XRF) analysis. In cases using XRF, when radiation is irradiated on the surface of an electrode, the amount of platinum per unit area can be confirmed after a certain period of detection. When XRF is not used, an electrode is cut to the size of 10*10 cm after coating, its weight is measured, and then multiplied by the amount of platinum, followed by division by the electrode area to determine the platinum per unit area. Embodiments are not limited thereto.

Platinum loading amount: (Electrode weight x Platinum amount ratio in electrode) / Unit area

The amount of platinum in the catalyst layer may be 85 wt% or more, 80 to 99 wt%, 85 to 99 wt%, 90 to 99 wt%, 80 to 90 wt% or 80 to 95 wt%.

When the amount of platinum in the catalyst layer is less than 80 wt%, the durability of the membrane electrode assembly may deteriorate. Accordingly, the amount of platinum may be adjusted to be 80 wt% or more, and when the amount of platinum exceeds 95 wt%, the manufacturing defect rate of the membrane electrode assembly increases. Accordingly, the amount of platinum may be adjusted to be 95 wt% or less.

The amount of platinum may be measured by thermogravimetric analysis (TGA). In some embodiments, the mass loss may be measured while increasing the temperature at a rate of 5 degrees per minute from the TGA temperature of 25 to 1,000 degrees, but embodiments are not particularly limited thereto.

In this regard, the platinum may include platinum nanoparticles, and the diameter of the nanoparticles may be 2 to 15 nm, or 2 to 10 nm, but the shape or diameter of the particles is not limited thereto.

The diameter of the particle may refer to the major axis diameter of the particle. The length of a particle measured according to a set rule may be used as a particle diameter.

The diameter of the particle may be measured by X-ray diffraction (XRD) or transmission electron microscopy (TEM), and specifically, may be measured using the Scherer Equation below, and may refer to the length measured as the particle diameter through a TEM image.

$$D = k\lambda \,/\beta\cos\theta$$

D = Crystallite size
k = Shape factor (0.9)
$\beta$ = Full width at half maximum of peak (FWHM)
$\lambda$ = X-ray wavelength
$\theta$ = Diffraction Angle

The amount of platinum in the electrode portion may be 80 to 85 wt%, 80 to 84 wt%, 80 to 83 wt%, 80 to 82 wt%, 81 to 85 wt%, 81 to 84 wt%, 81 to 83 wt%, 82 to 85 wt%, 82 to 84 wt%, or 83 to 85 wt%.

When the amount of platinum in the electrode portion is less than 80 wt%, the durability of the membrane electrode assembly may deteriorate. Accordingly, the amount of platinum may be adjusted to be 80 wt% or more, and when the amount of platinum exceeds 85 wt%, the manufacturing defect rate of the membrane electrode assembly increases. Accordingly, the amount of platinum may be adjusted to be 85 wt% or less.

The amount of platinum may be measured by TGA.

In some embodiments, the catalyst layer and the electrode portion including the same may easily retain durability for special applications using oxygen as a cathode fuel, by including a high amount of platinum.

In the electrode portion, the gas diffusion layer may include carbon paper and a micro-porous layer (MPL). The density of carbon paper may be, but is not limited to, 0.3 to 0.6 g/cm$^3$.

The gas diffusion layer may include polytetrafluoroethylene (PTFE).

In an embodiment, carbon paper of the gas diffusion layer may include PTFE.

For example, carbon paper is impregnated with PTFE, and the amount of the PTFE in carbon paper may be 15 to 25 wt%, 18 to 25 wt%, 20 to 25 wt%, 15 to 23 wt%, or 18 to 23 wt%, for example, 18 to 23 wt%.

When the proportion of PTFE is less than 15 wt%, the durability of the electrode portion or the membrane electrode assembly including the electrode portion may decrease. Accordingly, the proportion of PTFE may be controlled to be more than that, and when the proportion of PTFE exceeds 25 wt%, the performance of the electrode portion or the membrane electrode assembly including the electrode portion may decrease. Accordingly, the proportion of PTFE may be controlled to be 25 wt% or less.

The thickness ratio of the micro-porous layer to the total thickness of the gas diffusion layer may be 3 to 5%, 3.5 to 4.5%, or 4 to 5%.

The thickness of the micro-porous layer refers to the thickness of the micro-porous layer existing in the gas diffusion layer.

The micro-porous layer controls the fuel supply and water repellency. Therefore, when the thickness ratio of the micro-porous layer is less than 3% or more than 5%, the water repellency control and fuel supply inside the membrane electrode assembly may not be smooth, which may reduce the performance and durability of the electrode portion or the membrane electrode assembly including the electrode portion. Therefore, the thickness ratio of the micro-porous layer may be controlled to be 3 to 5%.

In an embodiment, the micro-porous layer of the gas diffusion layer may include PTFE. For example, the micro-porous layer is impregnated with PTFE, and the amount of PTFE in the micro-porous layer may be 25 to 35 wt%, or 25 to 30 wt%, for example, 25 to 35 wt%.

In case where the proportion of PTFE is less than 25 wt%, the durability of the electrode portion or a membrane electrode assembly including the electrode portion may decrease. Accordingly, the proportion of PTFE may be controlled to be more than that, and in case where the proportion of PTFE exceeds 35 wt%, the performance of the electrode portion or the membrane electrode assembly including the electrode portion may decrease. Accordingly, the proportion of PTFE may be controlled to be 35 wt% or less.

The impregnation degree of the micro-porous layer in the gas diffusion layer may be 0.1 or less, 0.01 to 0.1, 0.02 to 0.15, or 0.02 to 0.1. The degree of impregnation of the micro-porous layer is calculated as the ratio of the average thickness of the micro-porous layer to the total thickness of the gas diffusion layer.

The micro-porous layer may be minimally impregnated into carbon paper, and in case where the impregnation degree of the micro-porous layer exceeds 0.1, the water repellency and fuel permeability may decrease, potentially lowering the output performance and durability of the membrane electrode assembly.

The impregnation degree refers to the thickness of the micro-porous layer that has entered carbon paper, and may be calculated by the following equation.

$$\text{Impregnation degree} = (\text{MPL } L_{min} + \text{MPL } L_{max})/(L_{GDL} \times 2)$$

MPL $L_{min}$: Minimum micro-porous layer impregnation thickness
MPL $L_{max}$: Maximum micro-porous layer impregnation thickness
LGDL: Thickness of Gas diffusion layer

As an optional embodiment, carbon paper and micro-porous layer of the gas diffusion layer may include PTFE. The amounts of PTFE contained in carbon paper and the micro-porous layer may vary and may be the same or different.

In an embodiment, the amount ratio of PTFE in carbon paper and PTFE in the micro-porous layer in the gas diffusion layer may be 1:1 to 1:2.5, 1:1 to 1:2, 1:1 to 1:1.5, 1:1.5 to 1:2.5, or 1:2 to 1:2.5, for example, 1:1 to 1:2.5.

PTFE controls the water repellency in the membrane electrode assembly, and since a significant amount of water is generated on an electrode surface, the ratio of PTFE amount in the micro-porous layer contacting an electrode may be somewhat higher.

In case where the PTFE ratio is less than 1:1, the water repellency is reduced, which makes it difficult to manage water within the membrane electrode assembly, resulting in poor performance and increased deterioration, which may result in poor durability. In case where the ratio exceeds 1:2.5, the water repellency is too high, which may cause the membrane electrode assembly to dry out, resulting in poor performance of the membrane electrode assembly. Accordingly, the ratio of PTFE may be controlled to be 1:1 to 1:2.5.

In some embodiments, the electrolyte membrane 100 may include various materials. For example, the electrolyte membrane 100 may include a polymer membrane.

According to an embodiment of the present disclosure, the electrolyte membrane 100 may include a polymer film and may have a thickness of 50 to 80 $\mu$m, 55 to 80 $\mu$m, 60 to 80 $\mu$m, 50 to 70 $\mu$m, or 60 to 70 $\mu$m, for example, 50 to 80 $\mu$m.

The polymer film may include one or more of perfluorosulfonic acid (PFSA) and PTFE.

As the thickness of the electrolyte membrane 100 increases, the durability of the membrane electrode assembly increases, but the output performance of the membrane electrode assembly may decrease because the resistance of the membrane electrode assembly increases. Specifically, when the thickness of the electrolyte membrane 100 is less than 50 $\mu$m, the output performance increases, but the durability of the membrane electrode assembly decreases, and when the thickness exceeds 80 $\mu$m, the durability of the membrane electrode assembly increases, but the output performance may decrease. Accordingly, the thickness of the electrolyte membrane 100 may be controlled to be 50 to 80 $\mu$m.

As an optional embodiment, the electrolyte membrane 100 may include one or more reinforcing layers to enhance the strength and durability of the electrolyte membrane.

In an embodiment, the electrolyte membrane 100 may include a plurality of reinforcing layers.

The reinforcing layer may include PTFE.

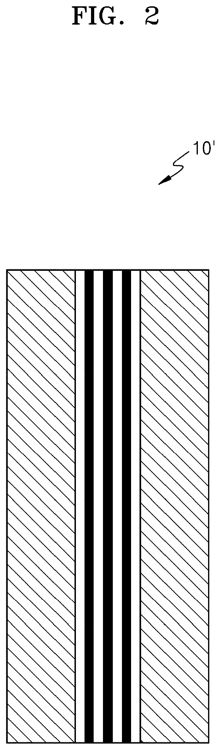

FIG. 2 is a cross-sectional diagram schematically illustrating an optional embodiment of the membrane electrode assembly of FIG. 1.

According to FIG. 2, a membrane electrode assembly 10' may include a first electrode portion 110A, a second electrode portion 110B, and an electrolyte membrane 100.

The electrolyte membrane 100 may include a plurality of reinforcing layers 130 spaced apart from each other as shown in FIG. 2.

The number of reinforcing layers 130 may be two or more, or three or more, and may be set to an appropriate number to improve the durability of a membrane electrode assembly and a fuel cell.

The proportion of the reinforcing layer 130 in the electrolyte membrane 100 may be 20 to 30%, or 25 to 30%, for example, 20 to 30%.

In case where the ratio of the reinforcing layer 130 is less than 20%, the durability of the membrane electrode assembly may decrease, and in case where it is more than 30%, the performance retention rate may decrease. Accordingly, the ratio of the reinforcing layer may be controlled to 20 to 30%.

In some embodiments, the membrane electrode assembly may include a plurality of reinforcing layers, so that the durability of the membrane electrode assembly and the fuel cell including the same may be enhanced.

A fuel cell according to an embodiment of the present disclosure may include a membrane electrode assembly, for example, the membrane electrode assembly 10 or 10'.

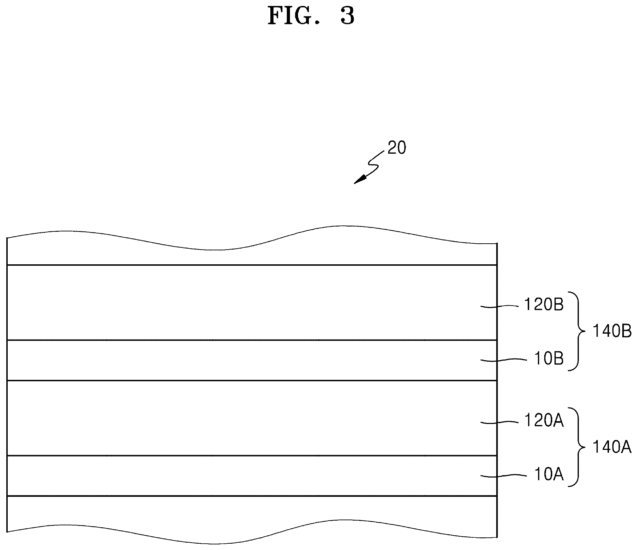

FIG. 3 is a cross-sectional view schematically showing a fuel cell according to an embodiment of the present disclosure.

According to FIG. 3, a fuel cell 20 may include one or more unit cells, and for example, may include a plurality of unit cells 140A and 140B.

Although two unit cells 140A and 140B are illustrated in FIG. 3, the number is not limited, and as an example, one unit cell may be included, or as another example, three or more unit cells may be included.

As an optional embodiment, the fuel cell 20 may further include a substrate (not shown) that supports the stacked unit cells.

A first unit cell 140A and a second unit cell 140B respectively include porous supports 120A and 120B and membrane electrode assemblies 10A and 10B.

Each of the porous supports 120A and 120B may have a pore gradient in which the pore size increases in an inward direction from opposite surfaces, and may have a thickness of 0.1 to 1 mm.

In this application, the term "micro-porous" refers to a material having micropores in the nanometer range in size, for example, a material having micropores having a size of about 20 to 2,000 nm. In this application, mesoporosity refers to a material having mesopores of micron size, for example, a material having mesopores having a size of about 2 to about 500 $\mu$m.

The porous support may be obtained by sintering metal powder. For example, the meso-porous metal powder may be mixed with a binder or the like and molded, and then micro-porous metal powder may be coated thereon, and the resultant product may be simultaneously sintered to obtain a target shape.

The membrane electrode assemblies 10A and 10B may be used in the same manner as the membrane electrode assemblies 10 and 10' in the embodiments described above or modified as needed, and a more detailed description is omitted.

**Mode for Carrying out the Invention**

Hereinafter, embodiments of the present disclosure and Examples related thereto will be described in detail.
However, the examples and experimental examples described below are only intended to specifically illustrate one aspect of the present disclosure, and the present disclosure is not limited thereto.

**<Example> Manufacturing of membrane electrode assembly**

Manufacturing of gas diffusion layer

A 20% PTFE solution and carbon paper having a density of 0.4 to 0.55 g/cm$^3$ were prepared. Carbon paper was placed in a PTFE solution so that the PTFE was uniformly impregnated into carbon paper (18 to 23%). The PTFE-impregnated carbon paper was dried in an oven at 80°C for 3 hours.
Carbon, a PTFE solution, surfactant, and a solvent were prepared, placed in a container in a certain amount, and mixed evenly using a dispersion device. The completed carbon ink was uniformly coated on PTFE-impregnated carbon paper using a wire bar. The amount of PTFE in the micro-porous layer was 27 to 33%, and the coating thickness was maintained at 9 to 14 $\mu$m. Carbon paper coated with carbon ink was first dried in an oven at 80 °C for 8 hours. Secondary heat treatment was performed at 300 °C for 3 hours. After heat treatment, a gas diffusion layer was completed in which a micro-porous layer impregnation thickness of less than 54 $\mu$m (impregnation degree of less than 0.1, and a total gas diffusion layer thickness 280 $\mu$m) was formed in carbon paper.

Manufacturing of electrode portions

A high-amount platinum-loaded catalyst (platinum 90 to 95%, carbon 5 to 10%), ionomer, and a solvent (DI water, alcohol) were placed in a container, premixed, and then mixed with a dispersion device so that the catalyst and the ionomer solvent were uniformly distributed. In this regard, the platinum ratio in all of the electrode portions was set to be 80 to 85%. A certain amount of the completed catalyst ink was placed on the gas diffusion layer and coated using a wire bar to match the anode loading and the cathode loading. The coated electrodes were dried in an 80°C oven for 12 hours to complete the electrode portions for the fuel cell.

Fabrication of membrane electrode assemblies

An anode and a cathode, each coated with catalyst ink and an electrolyte membrane were prepared. The anode, the electrolyte membrane, and the cathode were stacked in this stated order, lightly pressed by hand, placed on a SUS plate, and then covered with the SUS plate. For thermal compression, a hot press (130°C) was used and the SUS plate was placed in the hot press and pressure (30 kg/cm$^2$) was applied for 6 minutes. The temperature was maintained at room temperature, thereby completing manufacture of the membrane electrode assembly.

**<Experimental Example 1> Analysis of platinum amount in the catalyst layer**

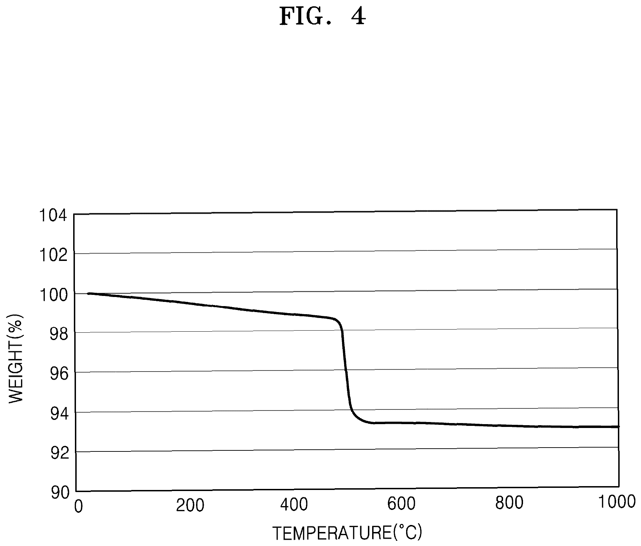

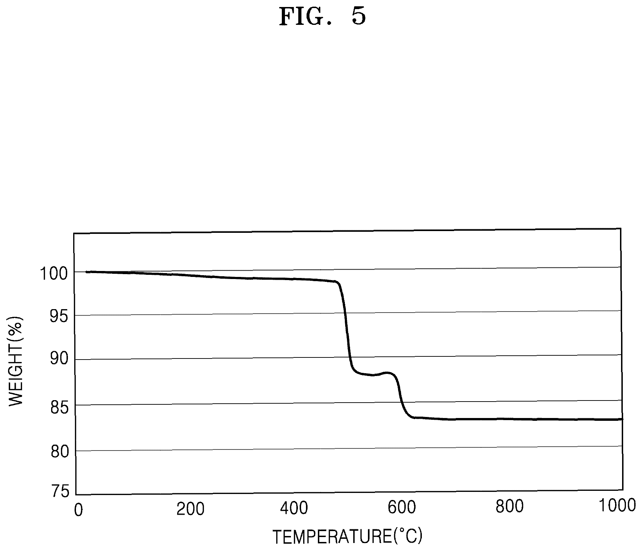

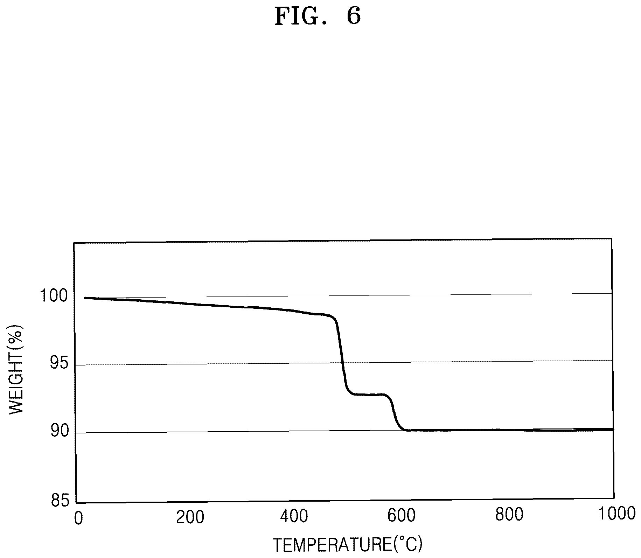

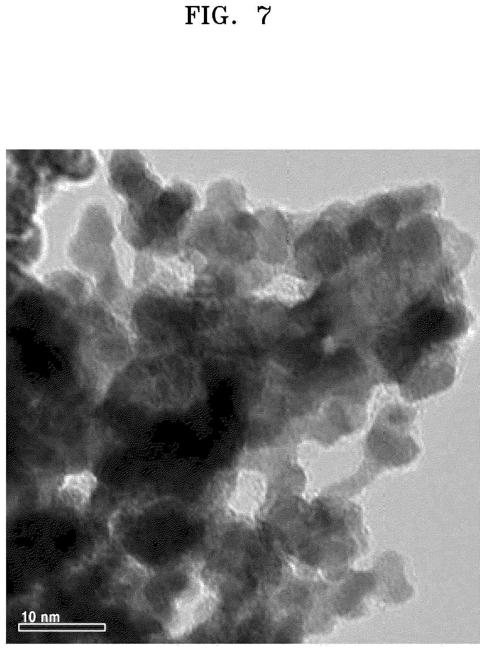

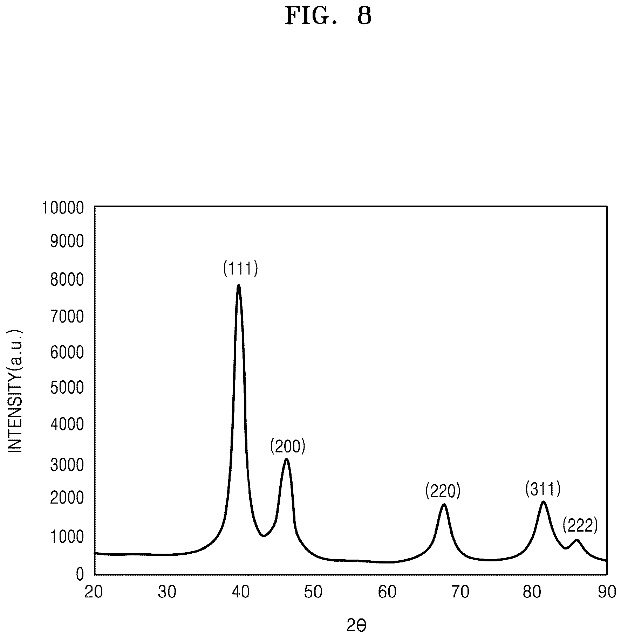

Thermogravimetric analysis (TGA) was performed to analyze the platinum amount in the catalyst layer. TGA was performed on each of a catalyst, an anode, and a cathode. Results are shown in FIGS. 4 to 6, respectively. As shown in FIG. 4, the platinum amount of the catalyst was measured to be 90 to 95 wt%, and as shown in FIGS. 5 and 6, the platinum amount of both the anode and the cathode was measured to be 80 to 85 wt%.
Meanwhile, transmission electron microscopy (TEM) and X-ray diffraction (XRD) were performed to analyze the size of the platinum nanoparticles. The measurement results of TEM and XRD are shown in FIGS. 7 and 8, respectively. The measurement results showed that the size of the platinum nanoparticles was 2 to 10 nm.
Platinum nanoparticles of this size range are included in an amount of 90 to 95 wt% in the catalyst layer, thereby improving the durability of the membrane electrode assembly and reducing the manufacturing defect rate.

**<Experimental Example 2> Performance comparison according to loading amount of platinum in catalyst layer**

Evaluation conditions for membrane electrode assemblies

The evaluation of the membrane electrode assembly was conducted in a single channel cell, and hydrogen and oxygen were supplied at stoichiometric equivalent ratios of 1.25 at an anode and 1.35 at a cathode, respectively. The pressure of hydrogen at the anode was 2.0 bar abs, the pressure of oxygen at the cathode was 2.2 bar abs, the cell temperature was 70°C, and the relative humidity was 100% at the anode and 100% at the cathode. The remaining experimental examples, examples, and comparative examples were tested under the same conditions.

Performance comparison according to platinum loading amount in the catalyst layer

Platinum loading affects the performance and long-term durability of membrane electrode assemblies. To this end, an electrode having a certain platinum loading needs to be manufactured using a high-amount platinum-loaded catalyst (90 to 95% platinum, 5 to 10% carbon).

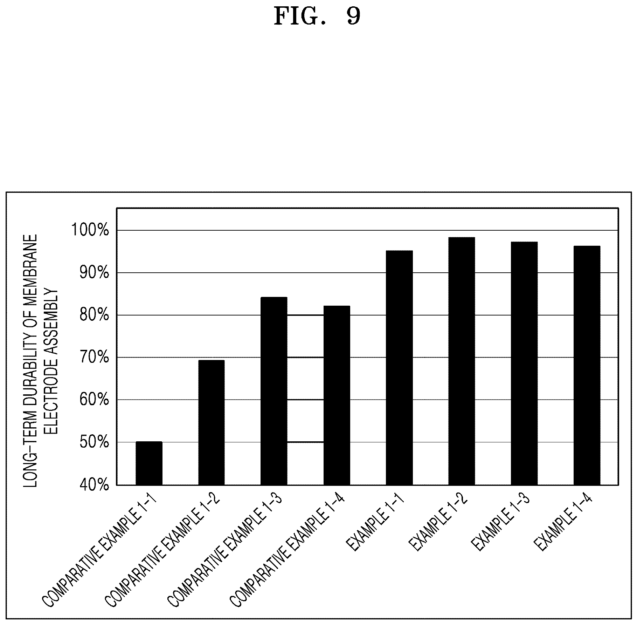

The results of comparing performance according to the amount of platinum loading in the catalyst layer are shown in Table 1 and FIG. 9.

[Table 1]

| | Anode loading (mg/cm$^2$) | Cathode loading (mg/cm$^2$) | Initial performance @0.75V | 1000 hours durability @0.75 V |
|---|---|---|---|---|
| Comparative Example 1-1 | 1.0 | 2.9 | 70% | 50% |
| Comparative Example 1-2 | 1.3 | 3.3 | 81% | 69% |
| Comparative Example 1-3 | 2.7 | 5.2 | 91% | 84% |
| Comparative Example 1-4 | 3.0 | 5.6 | 88% | 82% |
| Example 1-1 | 1.5 | 3.5 | 97% | 95% |
| Example 1-2 | 1.9 | 3.9 | 100% | 98% |
| Example 1-3 | 2.2 | 4.5 | 98% | 97% |
| Example 1-4 | 2.5 | 5.0 | 98% | 96% |

As shown in Table 1 and FIG. 9, it can be confirmed that the performance of the membrane electrode assembly is significantly superior when the platinum loading amount for the anode is 1.5 to 2.2 mg/cm$^2$, and when the platinum loading amount for the cathode is 3.5 to 4.5 mg/cm$^2$. As described above, when the platinum loading is less than a certain amount, the performance and long-term durability of the membrane electrode assembly may deteriorate. On the other hand, when the platinum loading exceeds a certain amount, severe cracking of the electrode surface may occur, resulting in increased surface resistance of the membrane electrode assembly and numerous manufacturing defects.

### <Experimental Example 3> Performance comparison according to platinum amount in electrode portion of fuel cell

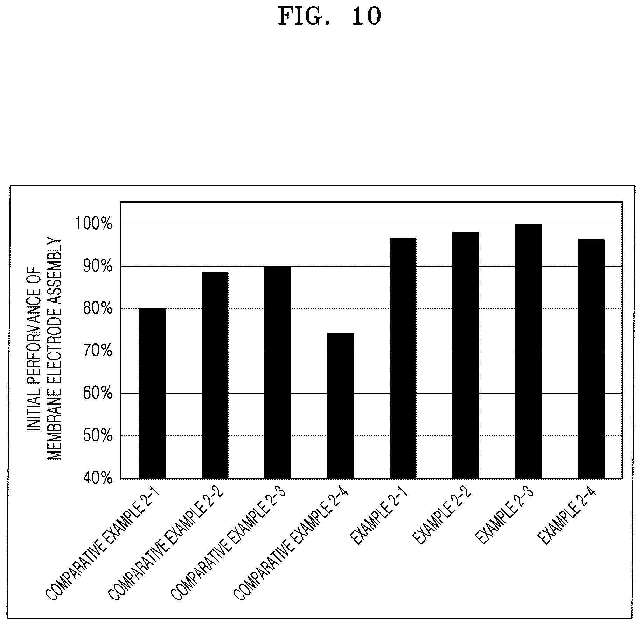

The platinum amount in the electrode portion of the fuel cell is determined according to the ionomer amount, and the performance of the membrane electrode assembly differs depending on the platinum amount ratio. Accordingly, the performance according to the platinum amount in the entire fuel cell electrode portion was compared. Experimental results are shown in Table 2, Table 3, and FIG. 10.

[Table 2]

| | Anode platinum amount (%) | Initial performance | 1000 hours durability |
|---|---|---|---|
| | | @0.75 V | @0.75 V |
| Comparative Example 2-1 | 77 | 80% | 69% |
| Comparative Example 2-2 | 79 | 89% | 82% |
| Comparative Example 2-3 | 84 | 90% | 84% |
| Comparative Example 2-4 | 85 | 74% | 50% |
| Example 2-1 | 80 | 97% | 94% |
| Example 2-2 | 81 | 98% | 96% |
| Example 2-3 | 82 | 100% | 98% |

(continued)

| | Anode platinum amount (%) | Initial performance @0.75 V | 1000 hours durability @0.75 V |
|---|---|---|---|
| Example 2-4 | 83 | 97% | 95% |

[Table 3]

| | Cathode platinum amount (%) | Initial performance @0.75 V | 1000 hours durability @0.75 V |
|---|---|---|---|
| Comparative Example 2-1 | 76 | 79% | 68% |
| Comparative Example 2-2 | 78 | 88% | 81% |
| Comparative Example 2-3 | 86 | 91% | 84% |
| Comparative Example 2-4 | 88 | 75% | 53% |
| Example 2-1 | 80 | 97% | 95% |
| Example 2-2 | 81 | 98% | 97% |
| Example 2-3 | 83 | 100% | 99% |
| Example 2-4 | 85 | 97% | 96% |

As can be seen from Table 2, Table 3 and FIG. 10, when the platinum amount in the electrode portion for the fuel cell is 80 to 85% as in Example, it can be seen that the initial performance and durability are excellent. As in Comparative Example, when the platinum amount is too low or too high, performance and durability will deteriorate. Accordingly, it is necessary to select the platinum amount appropriately.

**<Experimental Example 4> Performance comparison according to PTFE ratio in carbon paper**

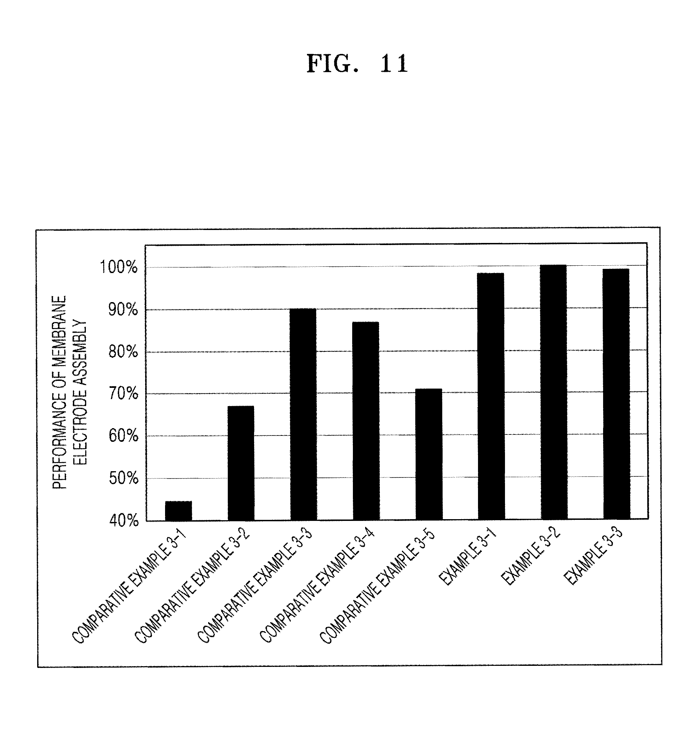

The performance and durability of the membrane electrode assembly can be improved when carbon paper contains a certain amount of PTFE. Accordingly, the performance of the PTFE ratio in carbon paper was compared. Results are shown in Table 4 and FIG. 11.

[Table 4]

| | PTFE ratio in carbon paper (%) | Performance @0.75 V |
|---|---|---|
| Comparative Example 3-1 | 5 | 44% |
| Comparative Example 3-2 | 12 | 67% |
| Comparative Example 3-3 | 16 | 90% |
| Comparative Example 3-4 | 25 | 87% |
| Comparative Example 3-5 | 30 | 71% |
| Example 3-1 | 18 | 97% |
| Example 3-2 | 20 | 100% |
| Example 3-3 | 23 | 99% |

As can be seen from Table 4 and FIG. 11, it can be confirmed that the performance is significantly excellent, especially when the proportion of PTFE in carbon paper is 18 to 23%, as in Example. As described above, when the proportion of PTFE in the carbon paper is too low, the hydrophobicity within the carbon paper decreases, resulting in reduced durability of the membrane electrode assembly. When the proportion of PTFE is too high, it blocks the pores in the carbon paper (blocking fuel supply) and significantly increases hydrophobicity, causing a decrease in the performance of the membrane electrode assembly. Therefore, a membrane electrode assembly with high performance and durability can be manufactured by containing an appropriate amount of PTFE in carbon paper.

**<Experimental Example 5> Performance comparison according to PTFE ratio in micro-porous layer**

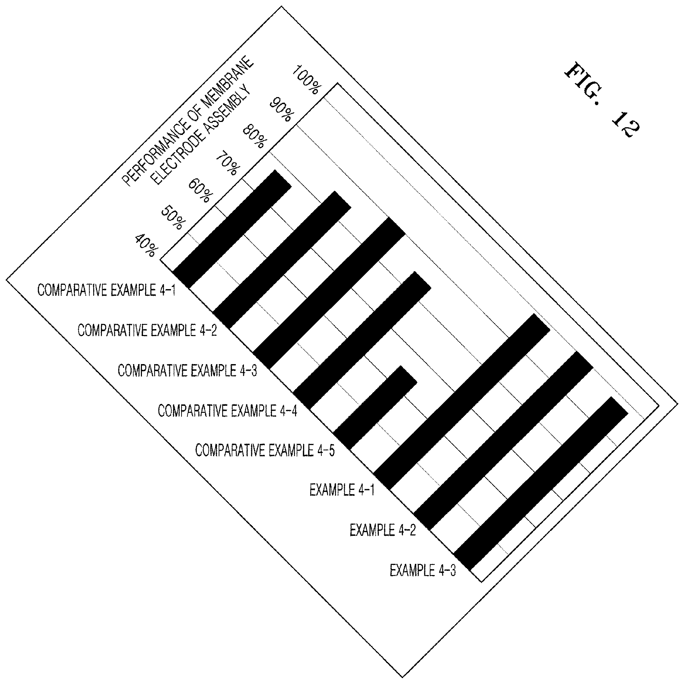

The performance was compared according to the PTFE ratio in the micro-porous layer. Results are shown in Table 5 and FIG. 12.

[Table 5]

|  | PTFE ratio (%) in micro-porous layer | Performance @0.75 V |
|---|---|---|
| Comparative Example 4-1 | 12 | 78% |
| Comparative Example 4-2 | 17 | 85% |
| Comparative Example 4-3 | 22 | 90% |
| Comparative Example 4-4 | 38 | 85% |
| Comparative Example 4-5 | 42 | 65% |
| Example 4-1 | 27 | 99% |
| Example 4-2 | 30 | 100% |
| Example 4-3 | 33 | 98% |

As can be seen from Table 5 and FIG. 12, the performance of the membrane electrode assembly is significantly improved when the proportion of PTFE in the micro-porous layer is 25 to 35%. Therefore, as in Experimental Example 4, a membrane electrode assembly with high performance and durability may be manufactured only when an appropriate amount of PTFE is included within the micro-porous layer.

**<Experimental Example 6> Performance comparison according to thickness of micro-porous layer**

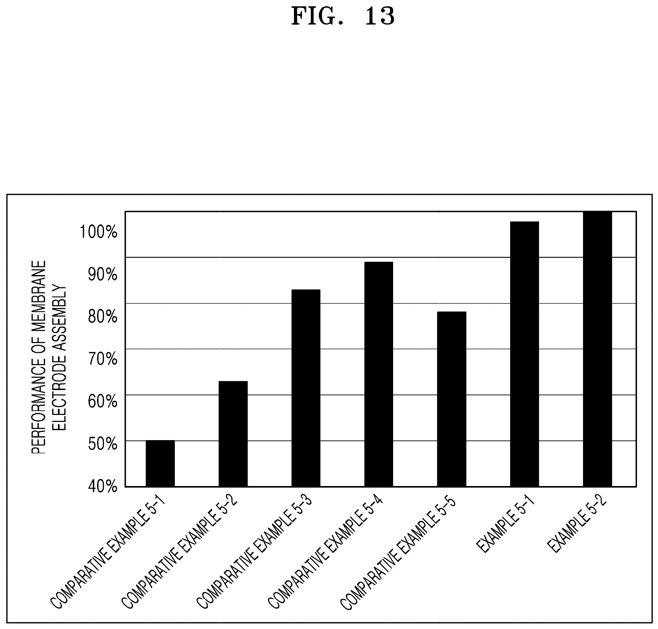

The micro-porous layer controls fuel supply and water repellency. When the micro-porous layer is too thick or thin, it is difficult to manage water properly inside the membrane electrode assembly and fuel supply is not smooth, which affects the performance and durability of the membrane electrode assembly. Accordingly, the performance according to the thickness of the micro-porous layer was compared. Results are shown in Table 6 and FIG. 13.

[Table 6]

|  | Thickness of micro-porous layer ($\mu$m) | Micro-porous layer thickness ratio (%) with respect to gas diffusion layer | Performance @0.75 V |
|---|---|---|---|
| Comparative Example 5-1 | 1 | 0.4 | 50% |
| Comparative Example 5-2 | 4 | 1.5 | 63% |
| Comparative Example 5-3 | 7 | 2.5 | 83% |
| Comparative Example 5-4 | 16 | 5.6 | 89% |
| Comparative Example 5-5 | 20 | 6.9 | 78% |
| Example 5-1 | 9 | 3.0 | 98% |
| Example 5-2 | 11 | 4.0 | 100% |
| Example 5-3 | 14 | 5.0 | 99% |

As shown in Table 6 and FIG. 13, it can be seen that the performance of the membrane electrode assembly is significantly improved when the thickness ratio of the micro-porous layer with respect to the gas diffusion layer is 3 to 5% as in Example.

**<Experimental Example 7> Performance comparison according to the degree of impregnation of the micro-porous layer**

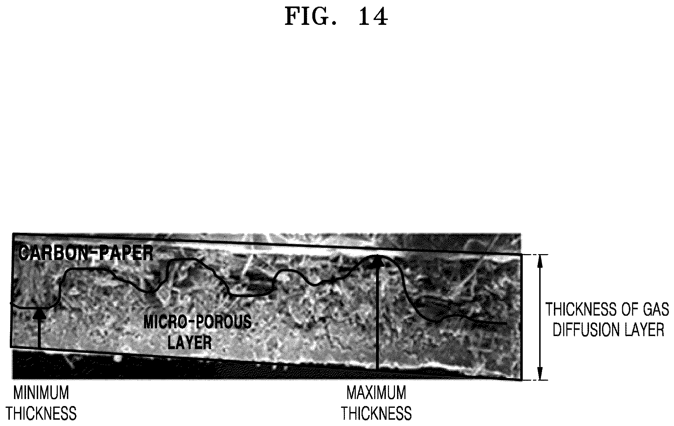

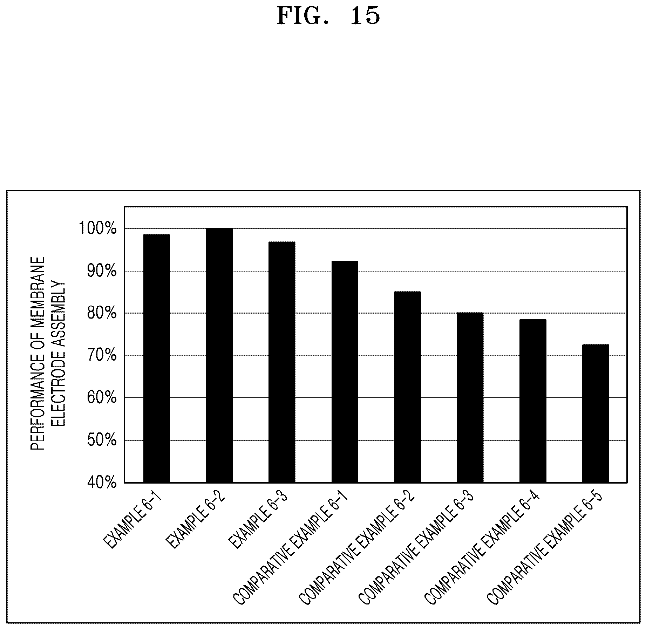

The impregnation degree of the micro-porous layer within the gas diffusion layer is calculated as the ratio of the average thickness of the micro-porous layer to the total thickness of the gas diffusion layer. The thickness of the gas diffusion layer in a typical micro-porous layer is as shown in FIG. 14, and the impregnation degree was calculated as described above. The results of performance comparison according to the impregnation degree of the micro-porous layer are shown in Table 7 and FIG. 15.

[Table 7]

| | Impregnation depth of micro-porous layer ($\mu$m) | Impregnation degree of micro-porous layer | Performance @0.75 V |
|---|---|---|---|
| Example 6-1 | 13 | 0.02 | 99% |
| Example 6-2 | 30 | 0.05 | 100% |
| Example 6-3 | 54 | 0.10 | 97% |
| Comparative Example 6-1 | 69 | 0.12 | 92% |
| Comparative Example 6-2 | 80 | 0.14 | 85% |
| Comparative Example 6-3 | 109 | 0.19 | 80% |
| Comparative Example 6-4 | 138 | 0.25 | 78% |
| Comparative Example 6-5 | 181 | 0.32 | 72% |

As shown in Table 7 and FIG. 15, it can be confirmed that the performance of the membrane electrode assembly is excellent when the impregnation degree of the micro-porous layer in the gas diffusion layer is 0.02 to 0.1.

**<Experimental Example 8> Performance comparison according to thickness of electrolyte membrane and reinforcing layer**

To compare the durability and performance of membrane electrode assemblies according to the thickness of the electrolyte membrane and the number of reinforcing layers, experiments were conducted as follows.

An electrolyte membrane (Perfluorosulfonic acid; PFSA) was cut into the size of 10*10 cm. The size and thickness of the electrolyte membrane were measured five times using a vernier caliper and a micrometer, and the average values were calculated and set as the initial size and thickness of the electrolyte membrane. Afterwards, a constant temperature bath containing DI water was prepared. The temperature of the constant temperature bath was set to 80°C, and the electrolyte membrane was stored in the constant temperature bath for 24 hours. After 24 hours, the electrolyte membrane was taken out, and only the moisture on the surface thereof was removed. The size and thickness of the electrolyte membrane were measured five times using a vernier caliper and a micrometer, and the average values were calculated to obtain the difference in size and thickness values from the initially measured electrolyte membrane.

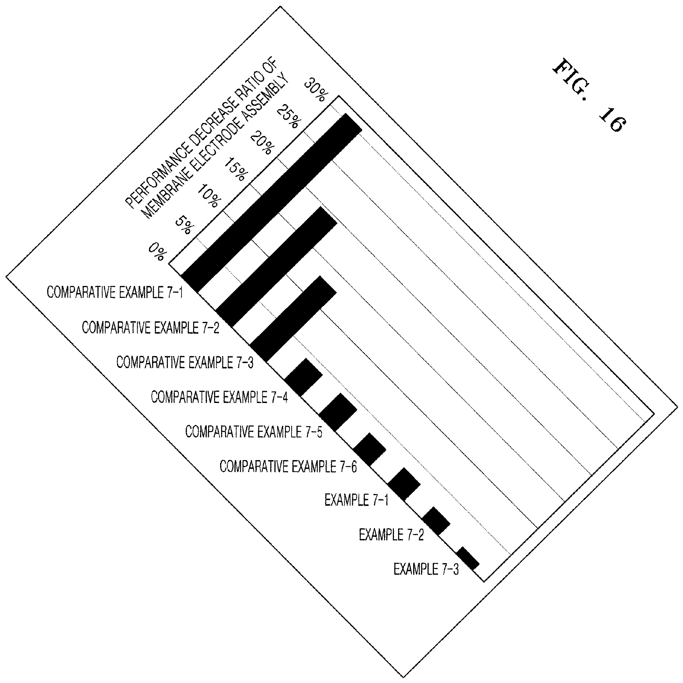

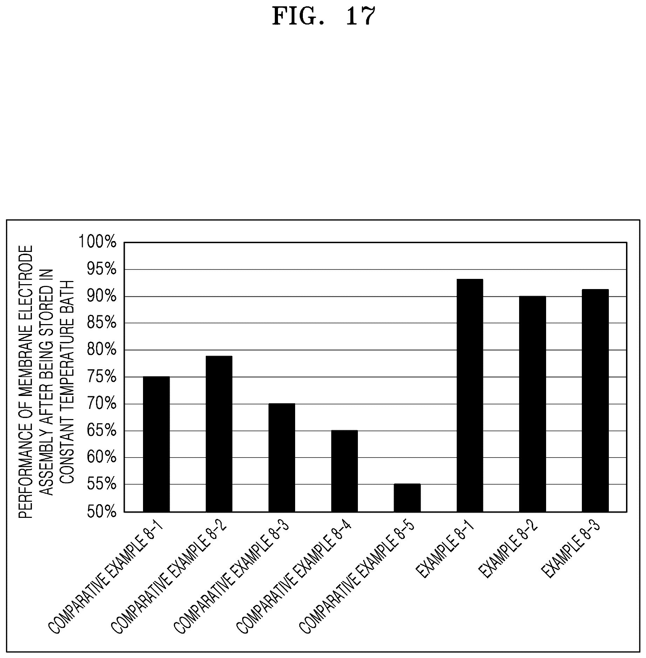

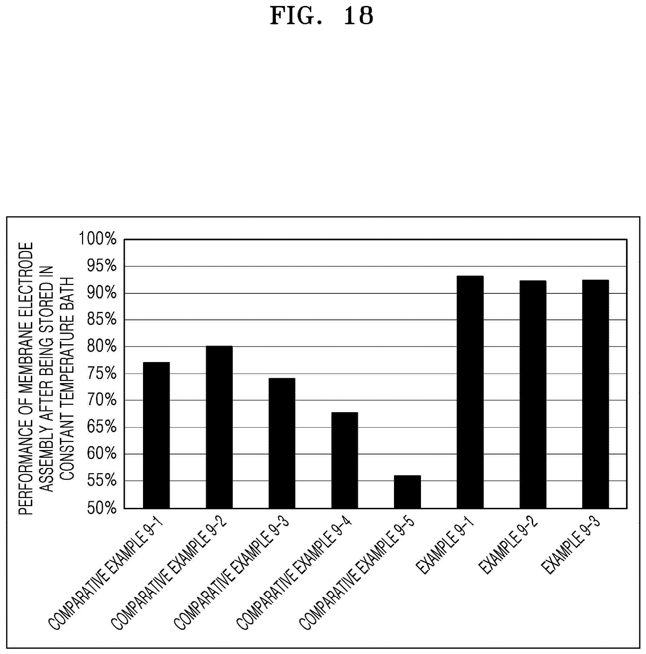

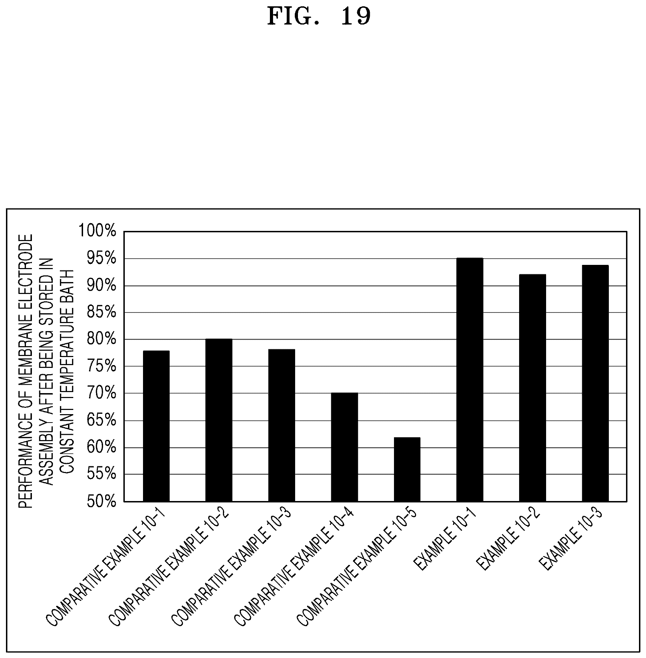

The performance comparison results according to the thickness of the electrolyte membrane are shown in Table 8 and FIG. 16, and the performance comparison results according to the number of reinforcing layers (PTFE) are shown in Tables 9 to 11 and FIGS. 17 to 19.

[Table 8]

| | Thickness ($\mu$m) | Initial performance @0.75 V | Performance after wet-dry @0.75 V | Performance decreas e | Increase area ratio |
|---|---|---|---|---|---|
| Comparative Example 7-1 | 15 | 100% | 70% | 30% | 13% |
| Comparative Example 7-2 | 30 | 97% | 78% | 19% | 10% |
| Comparative Example 7-3 | 45 | 95% | 82% | 13% | 7% |
| Comparative Example 7-4 | 85 | 82% | 78% | 4% | 3% |
| Comparative Example 7-5 | 100 | 76% | 72% | 4% | 2% |
| Comparative Example 7-6 | 125 | 69% | 66% | 3% | 2% |
| Example 7-1 | 50 | 94% | 91% | 3% | 3% |
| Example 7-2 | 60 | 93% | 91% | 2% | 2% |

(continued)

| | Thickness (μm) | Initial performance @0.75 V | Performance after wet-dry @0.75 V | Perform ance decreas e | Increase area ratio |
|---|---|---|---|---|---|
| Example 7-3 | 80 | 91% | 90% | 1% | 2% |

As shown in Table 8 and FIG. 16, when the thickness of the electrolyte membrane is 50 to 80 μm as in Example, not only is the initial performance excellent, but the performance decrease is significantly reduced after the electrolyte membrane is stored in a constant temperature bath and wet-dried as described above.

[Table 9]

| | Thickness (μm) | Number of reinforcing layers | Reinforcing layer ratio | Initial performance @0.75 V | Performance retention ratio after wet-dry @0.75 V |
|---|---|---|---|---|---|
| Comparative Example 8-1 | 60 | 1 | 10% | 93% | 75% |
| Comparative Example 8-2 | 60 | 1 | 15% | 90% | 79% |
| Comparative Example 8-3 | 60 | 1 | 35% | 79% | 70% |
| Comparative Example 8-4 | 60 | 1 | 40% | 72% | 65% |
| Comparative Example 8-5 | 60 | 1 | 50% | 62% | 55% |
| Example 8-1 | 60 | 1 | 25% | 100% | 93% |
| Example 8-2 | 60 | 1 | 20% | 96% | 90% |
| Example 8-3 | 60 | 1 | 30% | 94% | 91% |

[Table 10]

| | Thickness (μm) | Number of reinforcing layers | Reinforcing layer ratio | Initial performance @0.75 V | Performance retention ratio after wet-dry @0.75 V |
|---|---|---|---|---|---|
| Comparative Example 9-1 | 60 | 2 | 10% | 91% | 77% |
| Comparative Example 9-2 | 60 | 2 | 15% | 88% | 80% |
| Comparative Example 9-3 | 60 | 2 | 35% | 80% | 74% |
| Comparative Example 9-4 | 60 | 2 | 40% | 74% | 68% |
| Comparative Example 9-5 | 60 | 2 | 50% | 64% | 56% |
| Example 9-1 | 60 | 2 | 25% | 100% | 93% |
| Example 9-2 | 60 | 2 | 20% | 96% | 92% |
| Example 9-3 | 60 | 2 | 30% | 95% | 92% |

[Table 11]

| | Thickness (μm) | Number of reinforcing layers | Reinforcing layer ratio | Initial performance @0.75 V | Performance retention ratio after Wet-Dry @0.75 V |
|---|---|---|---|---|---|
| Comparative Example 10-1 | 60 | 3 | 10% | 92% | 78% |
| Comparative Example 10-2 | 60 | 3 | 15% | 89% | 80% |
| Comparative Example 10-3 | 60 | 3 | 35% | 82% | 78% |

(continued)

|  | Thickness (μm) | Number of reinforcing layers | Reinforcing layer ratio | Initial performance @0.75 V | Performance retention ratio after Wet-Dry @0.75 V |
|---|---|---|---|---|---|
| Comparative Example 10-4 | 60 | 3 | 40% | 76% | 70% |
| Comparative Example 10-5 | 60 | 3 | 50% | 65% | 62% |
| Example 10-1 | 60 | 3 | 25% | 100% | 95% |
| Example 10-2 | 60 | 3 | 20% | 98% | 92% |
| Example 10-3 | 60 | 3 | 30% | 99% | 94% |

As shown in Tables 9 to 11 and FIGS. 17 to 19, when one or more reinforcing layers exist separated from each other and the ratio of reinforcing layers in the electrolyte membrane is 20 to 30%, the initial performance and performance retention ratio are significantly superior. Although the present disclosure has been described with reference to embodiments shown in the drawings, these are examples only, and those skilled in the art will understand that various modifications and variations of the embodiments are possible therefrom. Therefore, the true technical protection scope of the present disclosure should be determined by the technical idea of the appended patent claims.

**Claims**

1.   A membrane electrode assembly comprising:

   a first electrode portion, a second electrode portion, and an electrolyte membrane, wherein
   the electrode portions each include a catalyst layer and a gas diffusion layer,
   the catalyst layer includes platinum and a carbon support, and
   a platinum loading amount of the first electrode portion or the second electrode portion is 1.5 to 5 $mg/cm^2$

2.   The membrane electrode assembly of claim 1, wherein
   a platinum amount of the first electrode portion or the second electrode portion is 80 to 85 wt%.

3.   The membrane electrode assembly of claim 1, wherein
   the platinum comprises platinum nanoparticles having a diameter of 2 to 10 nm.

4.   The membrane electrode assembly of claim 1, wherein
   a thickness of the electrolyte membrane is 50 to 80 μm.

5.   The membrane electrode assembly of claim 1, wherein

   electrolyte membrane includes a reinforcing layer, and
   a ratio of the reinforcing layer to the electrolyte membrane is 20 to 30%.

6.   The membrane electrode assembly of claim 1, wherein
   the electrolyte membrane comprises a plurality of reinforcing layers spaced apart from each other.

7.   The membrane electrode assembly of claim 1, wherein
   the gas diffusion layer comprises carbon paper and a micro-porous layer.

8.   The membrane electrode assembly of claim 1, wherein
   the gas diffusion layer includes polytetrafluoroethylene (PTFE).

9.   The membrane electrode assembly of claim 7, wherein
   the carbon paper of the gas diffusion layer comprises 15 to 25 wt% of PTFE.

10.  The membrane electrode assembly of claim 7, wherein

a ratio of a thickness of the micro-porous layer to a total thickness of the gas diffusion layer is 3 to 5%.

11. The membrane electrode assembly of claim 7, wherein
the micro-porous layer in the gas diffusion layer comprises 25 to 35 wt% of PTFE.

12. The membrane electrode assembly of claim 7, wherein
an impregnation degree of the micro-porous layer in the gas diffusion layer is 0.01 to 0.1.

13. The membrane electrode assembly of claim 7, wherein

the carbon paper and the micro-porous layer of the gas diffusion layer comprise PTFE, and
a ratio of an amount of PTFE in carbon paper to an amount of PTFE in the micro-porous layer is 1:1 to 1:2.5.

14. A fuel cell comprising:
a plurality of unit cells spaced apart from each other, wherein each of the plurality of unit cells comprises the membrane electrode assembly of claim 1.

# FIG. 1

110A    100    110B    10

# FIG. 2

# FIG. 3

FIG. 4

# FIG. 5

# FIG. 6

FIG. 7

FIG. 8

FIG. 9

FIG. 10

# FIG. 11

FIG. 12

FIG. 13

FIG. 14

THICKNESS OF GAS
DIFFUSION LAYER

MINIMUM
THICKNESS

MAXIMUM
THICKNESS

FIG. 15

FIG. 16

# FIG. 17

# FIG. 18

# FIG. 19

# EP 4 629 351 A1

## INTERNATIONAL SEARCH REPORT

| | International application No. |
|---|---|
| | **PCT/KR2023/014075** |

| A. | CLASSIFICATION OF SUBJECT MATTER |
|---|---|

**H01M 4/92**(2006.01)i; **H01M 4/88**(2006.01)i; **H01M 8/2418**(2016.01)i; **H01M 8/10**(2006.01)i

According to International Patent Classification (IPC) or to both national classification and IPC

| B. | FIELDS SEARCHED |
|---|---|

Minimum documentation searched (classification system followed by classification symbols)

H01M 4/92(2006.01); H01M 4/86(2006.01); H01M 4/88(2006.01); H01M 4/90(2006.01); H01M 8/10(2006.01); H01M 8/1004(2016.01); H01M 8/1053(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 막전극 접합체(MEA), 백금(platinum), 카본 담지체(carbon support), 촉매(catalyst), 전해질막(electrolyte membrane), 폴리테트라플루오로에틸렌(polytetrafluoroethylene)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2007-0119230 A (SAMSUNG SDI CO., LTD.) 20 December 2007 (2007-12-20) See paragraphs [0017], [0025]-[0037] and [0051]-[0053]; and figure 2. | 1-4,7-14 |
| Y | | 5-6 |
| Y | KR 10-2021-0124780 A (HYUNDAI MOTOR COMPANY et al.) 15 October 2021 (2021-10-15) See paragraphs [0072], [0098], [0102] and [0110]; and figure 2. | 5-6 |
| A | KR 10-1009624 B1 (SAMSUNG SDI CO., LTD.) 21 January 2011 (2011-01-21) See entire document. | 1-14 |
| A | KR 10-2008-0050873 A (LG CHEM, LTD.) 10 June 2008 (2008-06-10) See entire document. | 1-14 |
| A | US 2010-0255405 A1 (MATSUDA, Hiroaki et al.) 07 October 2010 (2010-10-07) See entire document. | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 January 2024** | **11 January 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/014075**

| Patent document cited in search report | | | Publication date (day/month/year) | Patent family member(s) | | | Publication date (day/month/year) |
|---|---|---|---|---|---|---|---|
| KR | 10-2007-0119230 | A | 20 December 2007 | KR | 10-1319377 | B1 | 17 October 2013 |
| | | | | US | 2008-0038615 | A1 | 14 February 2008 |
| | | | | US | 7771860 | B2 | 10 August 2010 |
| KR | 10-2021-0124780 | A | 15 October 2021 | CN | 113497265 | A | 12 October 2021 |
| | | | | US | 11581560 | B2 | 14 February 2023 |
| | | | | US | 2021-0313610 | A1 | 07 October 2021 |
| KR | 10-1009624 | B1 | 21 January 2011 | CN | 103560260 | A | 05 February 2014 |
| | | | | EP | 2120277 | A1 | 18 November 2009 |
| | | | | EP | 2120277 | B1 | 12 March 2014 |
| | | | | JP | 2009-277644 | A | 26 November 2009 |
| | | | | JP | 5155207 | B2 | 06 March 2013 |
| | | | | KR | 10-2009-0118263 | A | 18 November 2009 |
| | | | | US | 2009-0286124 | A1 | 19 November 2009 |
| | | | | US | 8470494 | B2 | 25 June 2013 |
| KR | 10-2008-0050873 | A | 10 June 2008 | KR | 10-0969162 | B1 | 08 July 2010 |
| US | 2010-0255405 | A1 | 07 October 2010 | JP | 2010-244791 | A | 28 October 2010 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHIWEI YANG et al.** *Prep. Pap.-Am. Chem. Soc., Div. Fuel Chem.*, 2004, vol. 49 (2), 599